# EUROPÄISCHE PATENTSCHRIFT

(11) **EP 1 852 926 B1**
(45) Veröffentlichungstag und Bekanntmachung des Hinweises auf die Patenterteilung: **06.08.2008**
(21) Anmeldenummer: 07006211.2
(22) Anmeldetag: 27.03.2007
(51) Int. Cl.: H01M 2/16

(54) **Separator zur Anordnung in Batterien und Batterie**
Separator for housing in batteries and battery
Séparateur destiné à l'agencement dans des batteries et batterie

(30) Priorität: 05.05.2006 DE 102006021273
(43) Veröffentlichungstag der Anmeldung: 07.11.2007
(73) Patentinhaber: Carl Freudenberg KG, 69469 Weinheim (DE)
(72) Erfinder: Kritzer, Peter, Dr., 67147 Forst (DE)

(56) Entgegenhaltungen:
- GB-A- 2 285 638
- GB-A- 2 298 817
- JP-A- 63 148 539
- US-A- 4 165 352

## Beschreibung

### Technisches Gebiet

Die Erfindung betrifft einen Separator zur Anordnung in Batterien gemäß dem Oberbegriff des Patentanspruchs 1. Die Erfindung betrifft des Weiteren eine Batterie, welche einen Separator umfasst.

### Stand der Technik

Bei aufladbaren Batteriesystemen, welche wässrige Elektrolyten verwenden, ist der Elektrolyt an der chemischen Reaktion beim Laden bzw. Entladen der Batterie beteiligt. Bei den bekannten Batteriesystemen muss ein genügend großes Elektrolytreservoir vorhanden sein, welches üblicherweise durch einen Vliesstoffseparator bereitgestellt wird. Hierfür ist ein genügend großes Volumen des Vliesstoffseparators notwendig. Eine Reduktion der Dicke des Separators ist daher nur bedingt realisierbar.

Bei Lithium-Batterien wird auf Grund deren hohen elektrochemischen Potentials kein wässriger Elektrolyt verwendet, da sich dieser elektrolytisch zersetzen würde. Bei diesem Batterietyp werden oxidationsstabile organische

Flüssigkeiten wie Propylencarbonat verwendet, die nicht an den chemischen Reaktionen beim Laden bzw. Entladen beteiligt sind. Sie übernehmen lediglich die Funktion des Ionentransports, so dass bei diesen Batteriesystemen der Separator sehr dünn sein kann. Beschränkt wird die Dicke des Separators lediglich durch die mechanische Festigkeit, insbesondere die Durchstoßfestigkeit.

Hochstromfeste Batterien, so genannte "High Power Batteries" finden vorzugsweise in Elektrowerkzeugen Verwendung. Batterien dieses Typs erfordern Separatoren, welche eine erhöhte Porosität aufweisen. Die Erhöhung der Porosität des Separators erhöht die Leistungsfähigkeit der Batterie und damit des Werkzeugs, in dem die Batterie verwendet wird.

Die aus dem Stand der Technik bekannten Separatoren weisen entweder in Bezug auf ihre Porosität oder in Bezug auf ihre mechanische Festigkeit erhebliche Nachteile auf.

Aus der US 4 165 352 ist ein Separator mit einem Flächengewicht von 90 bis 130 g/m² bekannt. Die GB 2 285 638 A zeigt einen Batterieseparator mit einer Dicke zwischen 75 und 380 µm.

### Darstellung der Erfindung

Der Erfindung liegt daher die Aufgabe zu Grunde, einen Separator derart auszugestalten und weiterzubilden, dass dieser ein ausreichend großes Volumen zur Aufnahme eines Elektrolyten zur Verfügung stellen kann und des Weiteren den mechanischen Beanspruchungen beim Einsatz in Batterien gerecht wird.

Die vorliegende Erfindung löst die zuvor genannte Aufgabe durch die Merkmale des Patentanspruchs 1. Danach weist ein Separator ein Flächengewicht von 5 bis 35 g/m² und eine Dicke von 10 bis 35 µm auf.

Erfindungsgemäß ist in einem ersten Schritt erkannt worden, dass die aus dem Stand der Technik bekannten Separatoren oftmals keine ausreichende Stabilität aufweisen. In einem zweiten Schritt ist erkannt worden, dass die Stabilität eines Separators dadurch erhöht werden kann, dass zumindest eine Lage als Trägerlage fungiert. Die Trägerlage weist erfindungsgemäß Fasern auf, die einen größeren Durchmesser aufweisen als eine zweite Lage. Die zweite Lage weist erfindungsgemäß eine Faserstruktur auf, die eine sehr hohe Porosität bei kleiner Porengröße gewährleisten kann. Insoweit ist eine Batterie realisierbar, welche einen stabilen Separator aufweist, so dass die Batterie problemlos herstellbar ist. Durch die Stabilität des Separators ist nicht nur eine problemlose Fertigung der Batterie realisierbar, sondern auch deren hohe Lebensdauer. Schließlich ist durch den erfindungsgemäßen Separator eine hohe Porosität erzeugbar, so dass eine Batterie hoher Leistungsfähigkeit realisierbar ist.

Der Separator weist ein Flächengewicht von 5 - 35 g/m² auf. Die Auswahl des Flächengewichts aus diesem Bereich stellt sicher, dass die Separatoren eine ausreichende Festigkeit aufweisen, um maschinell verarbeitet zu werden. Als noch gebrauchstauglich im Hinblick auf die Stabilität hat sich insbesondere der Bereich von 5 bis 20 g / m² erwiesen.

Der Separator ist durch eine Dicke von 10 - 35 µm gekennzeichnet. Die Auswahl der Separatordicke aus diesem Bereich stellt sicher, dass der Separator ein ausreichend großes Volumen zur Aufnahme eines Elektrolyten zur Verfügung stellen kann und des Weiteren den mechanischen Beanspruchungen gerecht wird. Als besonders vorteilhaft im Hinblick auf das Aufnahmevermögen bei möglichst geringer Dicke hat sich ein Bereich von 10 bis 25 g /m² erwiesen.

Folglich ist die eingangs genannte Aufgabe gelöst.

Die erste Lage könnte Fasern umfassen, die einen mittleren Durchmesser aufweisen, der größer als 2 µm ist. Die zweite Lage könnte Fasern umfassen, die einen mittleren Durchmesser aufweisen, der kleiner als 800 nm ist. Diese konkrete Ausgestaltung erlaubt einerseits die Ausbildung einer hinreichend stabilen Trägerlage, welche die zweite Lage stabilisiert. Die zweite Lage muss folglich nahezu keinen mechanischen Anforderungen gerecht werden und kann unabhängig von der ersten Lage im Hinblick auf ihre Porosität und Faserstruktur eingestellt werden. Es ist bekannt, dass zu große Porengrößen zum Ausfall einer Batterie führen können. Durch zu große Poren können leitfähige Durchwachsungen, so genannte Dendrite, entstehen und zu Kurzschlüssen führen. Die Verwendung von Nanofasem erlaubt die Ausbildung eines Vliesstoffs sehr hoher Porosität unter Ausbildung eines sehr geringen Porendurchmessers, so dass Durchwachsungen wirksam vermieden werden können.

Der Separator könnte einen dreilagigen Aufbau aufweisen, bei dem zwei erste Lagen eine zweite Lage zwischen sich einschließen. Diese konkrete Ausgestaltung erlaubt einen besonders stabilen Aufbau eines Separators, da die Nanofasem umfassende Lage sandwichartig zwischen zwei stabilen Trägerlagen fixiert wird. Diese konkrete Ausgestaltung realisiert eine besonders hohe Durchstoßfestigkeit des Separators.

Der Separator könnte einen dreilagigen Aufbau aufweisen, bei dem zwei zweite Lagen eine erste Lage zwischen sich einschließen. Ein Separator-dieser konkreten Ausgestaltung weist eine sehr hohe Porosität bei hinreichender Stabilität auf. Die zweiten Lagen schließen die erste Lage, welche als stabilisierende Trägerlage fungiert zwischen sich sandwichartig ein.

Bei den zuvor genannten Ausgestaltungen ist es denkbar, dass die Lagen miteinander verklebt sind. Eine Verklebung stellt eine kostengünstige Verbindung dar.

Des Weiteren ist denkbar, dass die Lagen durch Laminierung miteinander verbunden sind. Eine Laminierung erlaubt einen kontinuierlichen Fertigungsprozess.

Des Weiteren ist denkbar, dass die Lagen durch eine chemische Reaktion wie Vernetzung miteinander verbunden sind. Hierdurch ist eine besonders stabile und nahezu untrennbare Verbindung der Lagen realisiert.

Des Weiteren ist denkbar, dass die Lagen durch Verschweißung, beispielsweise durch Elektronenstrahlen, Laser oder Ultraschall, miteinander verschweißt werden. Diese Form der Verbindung lässt sich selektiv entweder vollflächig oder punktuell durchführen. Je nach dem, ob eine vollflächige oder
punktuelle Verbindung der Lagen untereinander erfolgt, kann die Elastizität und Biegesteifigkeit des Lagenverbundes eingestellt werden.

Schließlich ist denkbar, dass die Lagen durch mechanische Verfahren wie Wasserstrahlverfestigung miteinander verbunden werden. Eine Wasserstrahlverfestigung erlaubt eine Verschlingung von Endlosfasern oder Stapelfasern ohne den Einsatz von zusätzlichen Verbindungsstoffen. Hierdurch ist eine sortenreine Herstellung eines Separators realisierbar, der problemlos entsorgbar ist. Auf Klebstoffe oder andere verbindende Stoffe, die eine Batterie schädigen könnten, wird wirksam verzichtet.

Zumindest eine Lage könnte schichtweise aufgebaut sein. Vor diesem Hintergrund ist denkbar, dass jede erste Lage oder jede zweite Lage selbst als Lagenverbund ausgestaltet ist. Hierbei ist denkbar, dass jede Lage aus Fasern unterschiedlicher chemischer Zusammensetzung besteht. Des Weiteren ist denkbar, dass sowohl eine erste Lage als auch eine zweite Lage einen progressiven Aufbau aufweist. Unter progressivem Aufbau versteht man die Ausbildung eines Gradienten des Faserdurchmessers in irgend einer Richtung. Durch diesen Aufbau ist realisierbar, dass Schmutzpartikel von einer Lage gröberer Porosität aufgenommen werden, um Lagen feinerer Porosität vor Beschädigung zu schützen. Das Zusetzen gröberer Lagen im Laufe der Zeit bewirkt, dass Lagen gröberer Porosität zunehmend kleinere Poren erhalten und dadurch eine Filtration feiner Partikel bewirken können.

Zumindest eine Lage könnte Fasern aus einem Polymer umfassen, dessen Schmelzpunkt mindestens 160°C beträgt. Aus dem Stand der Technik sind Separatoren bekannt, welche bei Temperaturen oberhalb von 120°C zu schmelzen beginnen. Bei noch höheren Temperaturen kann der komplette Separator schmelzen, so dass sich ein so genannter "Melt-Down-Effekt" ergibt. Dieser Effekt führt zu einem kritischen Zustand der Batterie, da die

Separatormaterialien sogar schon bei Temperaturen unterhalb des Schmelzpunktes einen erheblichen thermischen Schrumpf aufweisen. Dies kann zu einer Freilegung der unterschiedlich geladenen Elektroden einer Batterie führen. Sobald die Elektroden frei gelegt sind, ist ein sicherer Betrieb der Batterie nicht mehr realisierbar.

Die erste Lage könnte Fasern aus Polyester umfassen. Polyester zeichnet sich durch eine erhöhte Temperaturstabilität aus. Ein Vliesstoff, der aus Polyester gefertigt ist, zeigt nach einer Erwärmungszeit von 30 Minuten bei einer Temperatur von 200°C einen thermischen Schrumpf von weniger als 2 %.

Die zweite Lage könnte Fasern aus einem Polyolefin umfassen. Die Verwendung eines Polyolefins erlaubt ein definiertes Verschließen der Poren bei Zunahme der Temperatur. Sofern eine Lage aus Polyester mit einer Lage aus Polyolefin kombiniert wird, ist die Temperaturstabilität und damit die mechanische Festigkeit des Separators gegeben, wobei gleichzeitig ein definiertes Verschließen der Poren realisierbar ist. Insoweit ist ein so genannter Abschalt-Effekt definiert einstellbar. Der Abschalteffekt erhöht die Sicherheit einer Batterie, so dass deren Überladung oder einem Kurzschluss durch Aufschmelzen eines speziellen polyolefinischen Materials begegnet werden kann.

Die zweite Lage könnte vor diesem Hintergrund ganz konkret Fasern aus Polyethylen umfassen.

Der Separator könnte eine Porosität von 35 - 80 % aufweisen. Diese konkrete Ausgestaltung erlaubt den Einsatz des Separators in hochstromfesten Batterien. Als besonders vorteilhaft im Hinblick auf das Leistungsvermögen einer Batterie hat sich ein Bereich von 45 bis 80 % erwiesen. Aus dem Stand der Technik sind Membranen bekannt, welche nach einer Extrusion direkt gereckt werden. Solche Membranen weisen eine Porosität auf, die üblicherweise deutlich unter dem hier beanspruchten Bereich liegt.

Der Separator könnte eine maximale Porengröße von 4 µm aufweisen. Die Auswahl der Porengröße aus diesem Bereich stellt sicher, dass keine Durchwachsungen des Separators erfolgen. Bei den Durchwachsungen handelt es sich um Dendritstrukturen, die sich ausbilden und zu Kurzschlüssen führen. Durch die Auswahl der maximalen Porengröße aus dem genannten Bereich wird die Ausbildung von Durchwachsungen wirksam verhindert. Eine besonders geringe Rate von Durchwachsungen wird erzielt, wenn die Porengröße (Porendurchmesser) maximal 2 µm beträgt.

Der Separator könnte eine Höchstzugkraft in Längsrichtung von mindestens 8N/(5cm) aufweisen. Diese konkrete Ausgestaltung stellt eine problemlose Verarbeitbarkeit sicher. Des Weiteren stellt diese Höchstzugkraft sicher, dass das Separatormaterial maschinell aufgewickelt werden kann. Ein

Separatormaterial der genannten Höchstzugkraft weist des Weiteren eine hohe Durchstoßfestigkeit auf.

Der Separator könnte nach 30minütiger Erwärmung auf 140° C einen thermischen Schrumpf in Querrichtung aufweisen, der geringer als 5 % ist. Ein solcher Separator erlaubt den Einsatz einer Batterie auch bei höheren Temperaturen bzw. nach längerer Betriebsdauer. Durch die Verwendung des genannten Separators ist sichergestellt, dass die Elektroden nahezu nicht freigelegt werden. Die Sicherheit des Batteriebetriebes ist daher auch nach längerer Betriebsdauer und bei höheren Temperaturen gesichert.

Die eingangs genannte Aufgabe wird des Weiteren durch eine Batterie gelöst, welche einen Separator der hier beschriebenen Art umfasst.

Um Wiederholungen zu vermeiden sei in Bezug auf die erfinderische Tätigkeit auf die Ausführungen zum Separator als solchem verwiesen.

Es gibt nun verschiedene Möglichkeiten, die Lehre der vorliegende Erfindung auf vorteilhafte Weise auszugestalten und weiterzubilden. Dazu ist einerseits auf die den nebengeordneten Patentansprüchen nachgeordneten Patentansprüche, andererseits auf die nachfolgende Erläuterung bevorzugter Ausführungsbeispiele der Erfindung an Hand der Tabelle zu verweisen. In Verbindung mit der Erläuterung der bevorzugten Ausführungsbeispiele der Erfindung an Hand der Tabelle werden auch im Allgemeinen bevorzugte Ausgestaltungen und Weiterbildungen der Lehre erläutert.

### Kurzbeschreibung der Tabelle

Tab. 1 zeigt konkrete Ausführungsbeispiele zweilagiger Separatoren.

### Ausführung der Erfindung

In Tab. 1 sind Materialien C1 bis C19 dargestellt. Diese Materialien sind aus zwei Lagen A und B zusammengesetzt.

Als Lage A, nämlich als erste Lage, wurden folgende Vliesstoffe eingesetzt:
- A1:: Ein nassgelegter, thermisch gebundener Polyester-Vliesstoff. Dieser Vliesstoff wies mittlere Faserdurchmesser zwischen 3 und 4 µm, ein Flächengewicht von 8 g/m² und eine Dicke von 13 µm auf.
- A2:: Ein nassgelegter, thermisch gebundener Polyolefin-Vliesstoff. Dieser Vliesstoff wies mittlere Faserdurchmesser zwischen 3 bis 4 µm, ein Flächengewicht von 13 g/m² und eine Dicke von 24 µm auf.
- A3:: Ein nassgelegter, mit Acrylat-Binder chemisch gebundener Vliesstoff aus Polyacrylnitril-Fasern mit einem Flächengewicht von 12 g/m² und einer Dicke von 24 µm.
- A4:: Ein thermisch verfestigter Polyester-Spinnvliesstoff. Dieser wies Fasern mit einem mittleren Faserdurchmesser von ca. 9 µm auf. Er hatte ein Flächengewicht von 14 g/m² und eine Dicke von 26µm.
- A5:: Ein Polypropylen-Meltblown-Vliesstoff mit einem Flächengewicht von 13 g/m² und einer Dicke von 26µm.
- A6:: Ein thermisch verfestigter Polyester-Trockenvliesstoff. Dieser wies Fasern mit einem mittleren Faserdurchmesser von ca. 12 µm auf. Er hatte ein Flächengewicht von 17 g/m² und eine Dicke von 26 µm.

Für die Lage B, welche als zweite Lage fungierte, wurden folgende Materialien eingesetzt:
- B1:: Auf die erste Lage wurden aus Methylenchlorid elektrostatisch gesponnene Polycarbonat-Fasern aufgetragen. Die Fasern wiesen mittlere Durchmesser auf, welche kleiner als 800 µm waren. Die zweite Lage wies ein Flächengewicht von 2 bis 10 g/m² auf.
- B2:: Aus N-Methyl-Pyrrolidon wurden auf eine erste Lage elektrostatisch Polysulfon-Faser sowie Polyethersulfon-Fasern gesponnen. Diese Fasern wiesen einen mittleren Durchmesser auf, der kleiner als 800 µm war. Die zweite Lage wies ein Flächengewicht von 5 g/m² auf.
- B3:: Auf die erste Lage wurden elektrostatisch aus Chlorethylen gesponnene Polyethylen-Fasern aufgebracht. Diese Fasern wiesen einen mittleren Durchmesser auf, der kleiner als 800 µm war. Die zweite Lage wies ein Flächengewicht von 3 bis 5 g/m² auf.
- B4:: Aus Hexaflouroisopropanol wurden elektrostatisch Fasern aus Polyethylentherephthalat gesponnen und auf der ersten Lage abgelegt. Die Fasern wiesen einen Durchmesser auf, der kleiner als 800 µm war. Die zweite Lage wies ein Flächengewicht von 3 g/m² auf.
- B5:: Aus N, N-Dimethylacetamid wurden elektrostatisch Polyvinyledenfluorid-Fasern gesponnen und auf der ersten Lage abgelegt. Diese Fasern wiesen einen mittleren Durchmesser auf, der kleiner als 800 µm war. Die zweite Lage wies ein Flächengewicht von 3 bis 5 g/m² auf.
- B6:: Aus Perchlorethylen wurden Polypropylen-Fasern elektrostatisch gesponnen und auf einer ersten Lage abgelegt. Diese Fasern wiesen einen mittleren Durchmesser auf, der kleiner als 800 µm war. Die zweite Lage wies ein Flächengewicht von 3 bis 5 g/m² auf.
- B7:: Aus Perchlorethylen wurden elektrostatisch Polystyrol-Fasern versponnen und auf der ersten Lage abgelegt. Diese Fasern wiesen einen mittleren Durchmesser auf, der kleiner als 800 µm war. Die zweite Lage wies ein Flächengewicht von 3 bis 5 g/m² auf.
- B8:: Es wurden Polyacrylnitril-Fasern elektrostatisch aus Dimethylformamid gesponnen. Diese Fasern wiesen einen mittleren Durchmesser auf, der kleiner als 800 µm war. Die zweite Lage wies ein Flächengewicht von 3 bis 5 g/m² auf.
- B9:: Aus Dimethylformamid wurden elektrostatisch Polyetherimid-Fasern gesponnen. Diese Fasern wiesen einen mittleren Durchmesser auf, der kleiner 800 µm war. Die zweite Lage wies ein Flächengewicht von 3 bis 5 g/m² auf.
- B10:: Aus einer Schmelze wurden Polypropylen- und Polyester-Fasern des Typs "island in the sea" gesponnen. Diese Fasern wiesen einen mittleren Durchmesser auf, der kleiner 800 µm war. Die zweite Lage wies ein Flächengewicht von 3 g/m² auf.
- B11:: In einem Melt-Blown-Prozess wurden Polyvinylidenfluorid-Fasern gesponnen. Diese Fasern wiesen einen mittleren Durchmesser um 600 µm auf. Die zweite Lage wies ein Flächengewicht von 5 g/m² auf.

Aus Tab. 1 ist ersichtlich, dass die Materialien C1 bis C 19 als Verbund zweier Lagen ausgestaltet sind. Dabei besteht beispielsweise das Material C5 aus einem Lagenverbund der Lage A1 und der Lage B2, wobei die Lage A1 als 12 erste Lage und die Lage B2 als zweite Lage fungiert. Die Lage A1 fungiert als Trägerlage und stabilisiert den Lagenverbund.

Spalte 3 der Tabelle 1 zeigt das Gesamtgewicht des Lagenverbunds in g/m². In Spalte 3 ist in Klammern aufgeführt, welcher Anteil am Gesamtgewicht der ersten Lage bzw. zweiten Lage zukommt. Spalte 4 der Tabelle gibt die Dicke des Lagenverbunds an. Spalte 5 stellt die Porosität des Lagenverbunds und Spalte 6 die maximale Porengröße dar. In Spalte 7 ist die Höchstzugkraft in Längsrichtung in der Einheit N/(5cm) angegeben. Spalte 8 schließlich gibt Aufschluss über den thermischen Schrumpf in Querrichtung, wobei dieser in % angegeben ist. Der thermische Schrumpf wurde bestimmt, indem eine Probe 30 Minuten lang auf 180°C erwärmt wurde.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

**Tabelle 1**

| Material | Lagen | Gesamtgewicht (g/m²) | Dicke (µm) | Porosität (%) | Max. Porengröße (µm) | HZK lä (N/5 cm) | Thermischer Schrumpf quer* (%) |
|---|---|---|---|---|---|---|---|
| C1 | A1 + B1 | 10(8+2) | 17 | 60 | 3.2 | 14 | < 2 bei 180°C |
| C2 | A1 + B1 | 12(8+4) | 21 | 57 | 1.8 | 14 | < 2 bei 180°C |
| C3 | A1 + B1 | 14(8+6) | 25 | 57 | 1.2 | 14 | < 2 bei 180°C |
| C4 | A1 + B1 | 18(8+10) | 33 | 58 | 1.0 | 15 | < 2 bei 180°C |
| C5 | A1 + B2 | 13(8+5) | 21 | 53 | 1.5 | 14 | < 2 bei 180°C |
| C6 | A1 + B3 | 13(8+5) | 22 | 50 | 1.7 | 14 | < 2 bei 180°C |
| C7 | A1 + B4 | 13(8+5) | 21 | 56 | 1.6 | 14 | < 2 bei 180°C |
| C8 | A1 + B5 | 13(8+5) | 22 | 64 | 1.5 | 14 | < 2 bei 180 °C |
| C9 | A1 + B6 | 13(8+5) | 23 | 53 | 1.8 | 14 | < 2 bei 180 °C |
| C10 | A1 + B7 | 13(8+5) | 22 | 53 | 1.5 | 14 | < 2 bei 180 °C |
| C11 | A1 + B8 | 13(8+5) | 22 | 58 | 1.5 | 14 | <2 bei 180 °C |
| C12 | A1 + B9 | 13(8+5) | 21 | 54 | 1.4 | 14 | < 2 bei 180 °C |
| C13 | A1 + B10 | 13(8+5) | 21 | 53 | 1.4 | 14 | < 2 bei 180 °C |
| C14 | A2 + B2 | 18(13+5) | 27 | 50 | 1.6 | 14 | < 2 bei 180 °C |
| C15 | A3 + B2 | 17(12+5) | 32 | 56 | 1.6 | 14 | <2 bei 180 °C |
| C16 | A4 + B2 | 19(14+5) | 33 | 57 | 1.7 | 14 | < 2 bei 180 °C |
| C17 | A5 + B2 | 21(16+5) | 32 | 42 | 1.8 | 14 | 10 bei 180 °C** |
| C18 | A6 + B2 | 22(17+5) | 32 | 49 | 2.9 | 14 | < 2 bei 180°C |
| C19 | A1 + B11 | 13(8+5) | 28 | 69 | 3.6 | 14 | < 2 bei 180°C |

## Patentansprüche

1. Separator zur Anordnung in Batterien, umfassend mindestens eine erste Lage und mindestens eine zweite Lage, wobei die Lagen als Vliesstoffe ausgestaltet sind und wobei die erste Lage Fasern aufweist, deren mittlere Durchmesser größer sind als die mittleren Durchmesser der Fasern der zweiten Lage, **gekennzeichnet durch** ein Flächengewicht von 5 bis 35 g/m² und eine Dicke von 10 bis 35 µm.

2. Separator nach Anspruch 1, **dadurch gekennzeichnet, dass** die erste Lage Fasern umfasst, die einen mittleren Durchmesser aufweisen, der größer als 2 µm ist, und die zweite Lage Fasern umfasst, die einen mittleren Durchmesser aufweisen, der kleiner als 800 nm ist.

3. Separator nach Anspruch 1 oder 2, **gekennzeichnet durch** einen dreilagigen Aufbau, bei dem zwei erste Lagen eine zweite Lage zwischen sich einschließen.

4. Separator nach Anspruch 1 oder 2, **gekennzeichnet durch** einen dreilagigen Aufbau, bei dem zwei zweite Lagen eine erste Lage zwischen sich einschließen.

5. Separator nach einem der Ansprüche 1 bis 4, **dadurch gekennzeichnet, dass** zumindest eine Lage schichtweise aufgebaut ist.

6. Separator nach einem der Ansprüche 1 bis 5, **dadurch gekennzeichnet, dass** zumindest eine Lage Fasern aus einem Polymer umfasst, dessen Schmelzpunkt mindestens 160° C beträgt.

7. Separator nach einem der Ansprüche 1 bis 6, **gekennzeichnet durch** eine Porosität von 35 bis 80 %, besonders bevorzugt 45 bis 80 %.

8. Separator nach einem der Ansprüche 1 bis 7, **gekennzeichnet durch** eine maximale Porengröße von 4 µm, besonders bevorzugt 2 µm.

9. Separator nach einem der Ansprüche 1 bis 8, **gekennzeichnet durch** eine Höchstzugkraft in Längsrichtung von mindestens 8 N / (5 cm).

10. Separator nach einem der Ansprüche 1 bis 9, **gekennzeichnet durch** einen thermischen Schrumpf in Querrichtung, der bei einer 30minütigen Erwärmung auf 140° C geringer ist als 5 %.

11. Batterie, umfassend einen Separator nach einem der voranstehenden Ansprüche.

## Claims

1. Separator for use in batteries, comprising at least one first ply and at least one second ply, the plies being rendered as fibrous nonwoven web fabrics, the first ply comprising fibres whose median diameters are greater than the median diameters of the fibres of the second ply, **characterized by** an areal weight of 5 to 35 g/m² and a thickness of 10 to 35 µm.

2. Separator according to Claim 1, **characterized in that** the first ply comprises fibres having a median diameter greater than 2 µm and the second ply comprises fibres having a median diameter smaller than 800 nm.

3. Separator according to Claim 1 or 2, **characterized by** a three-ply construction in which two first plies enclose a second ply.

4. Separator according to Claim 1 or 2, **characterized by** a three-ply construction in which two second plies enclose a first ply.

5. Separator according to any one of Claims 1 to 4,
**characterized in that** at least one ply has a layered construction.

6. Separator according to any one of Claims 1 to 5, **characterized in that** at least one ply comprises fibres of a polymer whose melting point is at least 160°C.

7. Separator according to any one of Claims 1 to 6, **characterized by** a porosity of 35 to 80%, particularly preferably 45 to 80%.

8. Separator according to any one of Claims 1 to 7, **characterized by** a maximum pore size of 4 µm, particularly preferably 2 µm.

9. Separator according to any one of Claims 1 to 8, **characterized by** an ultimate tensile force in the longitudinal direction of at least 8 N/(5 cm).

10. Separator according to any one of Claims 1 to 9, **characterized by** a thermal shrinkage in the transverse direction of less than 5% on 30 minutes' heating to 140°C.

11. Battery comprising a separator according to any one of the preceding claims.

## Revendications

1. Séparateur destiné à être installé dans des batteries et comprenant au moins une première couche et au moins une deuxième couche, les couches étant réalisées en feutre et la première couche présentant des fibres dont le diamètre moyen est supérieur au diamètre moyen des fibres de la deuxième couche,
**caractérisé par**
un poids par unité de surface de 5 à 35 g/m² et une épaisseur de 10 à 35 µm.

2. Séparateur selon la revendication 1, **caractérisé en ce que** la première couche contient des fibres dont le diamètre moyen est supérieur à 2 µm et la deuxième couche contient des fibres dont le diamètre moyen est inférieur à 800 nm.

3. Séparateur selon les revendications 1 ou 2,
**caractérisé par** une structure en trois couches, les deux premières couches enfermant entre elles une deuxième couche.

4. Séparateur selon les revendications 1 ou 2,
**caractérisé par** une structure en trois couches dans laquelle deux deuxièmes couches enferment entre elles une première couche.

5. Séparateur selon l'une des revendications 1 à 4, **caractérisé en ce qu'**au moins une couche a une structure stratifiée.

6. Séparateur selon l'une des revendications 1 à 5, **caractérisé en ce qu'**au moins une couche contient des fibres en un polymère dont le point de fusion est d'au moins 160°C.

7. Séparateur selon l'une des revendications 1 à 6, **caractérisé par** une porosité de 35 à 80 % et en particulier de 45 à 80 %.

8. Séparateur selon l'une des revendications 1 à 7, **caractérisé par** une taille maximale de pores de 4 µm et de façon particulièrement préférable de 2 µm.

9. Séparateur selon l'une des revendications 1 à 8, **caractérisé par** une résistance maximale en traction d'au moins 8 N/(5cm) dans le sens de sa longueur.

10. Séparateur selon l'une des revendications 1 à 9, **caractérisé par** un retrait thermique dans la direction transversale inférieur à 5 % lors d'un chauffage de 30 minutes à 140°C.

11. Batterie qui comprend un séparateur selon l'une des revendications précédentes.
